# EUROPÄISCHE PATENTANMELDUNG

(11) **EP 3 640 445 A1**
(43) Veröffentlichungstag der Anmeldung: **22.04.2020**
(21) Anmeldenummer: 18200719.5
(22) Anmeldetag: 16.10.2018
(51) Int. Cl.: F01N 11/00, F01N 3/035, F01N 3/023

(54) **VERFAHREN ZUR MESSUNG EINER KATALYTISCHEN FUNKTION EINES ZUR REINIGUNG EINES ABGASES EINES VERBRENNUNGSMOTORS GEEIGNETEN GEGENSTANDES**

(71) Anmelder: Ceramex Ltd, Gainsborough Lincolnshire DN21 2BE (GB)
(72) Erfinder: Mayer, Hanspeter, 8643 Allerheiligen (AT)
(74) Vertreter: Dummett Copp LLP

(57) **Zusammenfassung**

Die Erfindung betrifft eine Verfahren zur Messung einer katalytischen Funktion eines zur Reinigung eines Abgases eines Verbrennungsmotors geeigneten Gegenstandes, insbesondere eines Katalysators oder eines Partikelfilters (1) für ein Kraftfahrzeug oder eine Arbeitsmaschine, wobei ein Prüfgas, welches Stickoxid und/oder Kohlenwasserstoffe enthält, durch den Gegenstand bewegt wird, wobei eine Konzentration zumindest eines Bestandteiles des Prüfgases vor und nach einem Durchströmen des Gegenstandes gemessen wird. Um ein besonders genaues Messergebnis bei gleichzeitig kurzer Verfahrensdauer zu erreichen, ist erfindungsgemäß vorgesehen, dass der Gegenstand zusätzlich mit einem Reaktionsmittel, welches eine katalytische Reaktion im Gegenstand zur Reduktion des Stickoxides im Prüfgas bewirkt, beaufschlagt wird, um die katalytische Funktion des Gegenstandes unter Einwirkung des Reaktionsmittels und/oder eine HC-Light-off-Temperatur zu bestimmen.

Weiter betrifft die Erfindung ein der Gegenstand zusätzlich mit einem Reaktionsmittel, welches eine katalytische Reaktion im Gegenstand zur Reduktion des Stickoxides im Prüfgas bewirkt, beaufschlagt wird, um die katalytische Funktion des Gegenstandes unter Einwirkung des Reaktionsmittels zu bestimmen.

## Beschreibung

Die Erfindung betrifft ein Verfahren zur Messung einer katalytischen Funktion eines zur Reinigung eines Abgases eines Verbrennungsmotors geeigneten Gegenstandes, insbesondere eines Katalysators oder eines Partikelfilters für ein Kraftfahrzeug oder eine Arbeitsmaschine, wobei ein Prüfgas, welches Stickoxid und/oder Kohlenwasserstoffe enthält, durch den Gegenstand bewegt und eine Konzentration zumindest eines Bestandteiles des Prüfgases vor und nach einem Durchströmen des Gegenstandes gemessen wird.

Weiter betrifft die Erfindung eine Vorrichtung zur Messung einer katalytischen Funktion eines zur Reinigung eines Abgases eines Verbrennungsmotors geeigneten Gegenstandes, insbesondere eines Katalysators für ein Kraftfahrzeug, wobei mit der Vorrichtung ein Prüfgas durch den Gegenstand transportierbar und zumindest ein Bestandteil des Prüfgases vor und nach Passieren des Gegenstandes messbar ist.

Zur Reinigung von Abgasen von Verbrennungskraftmaschinen ist es aus dem Stand der Technik bekannt, in einem Abgasstrang Filter und Katalysatoren einzusetzen. Um Stickoxide in einem Abgas von beispielsweise einem Dieselmotor zu reduzieren, sodass immer strenger werdende Abgasnormen eingehalten werden können, werden unter anderem Entstickungs-Katalysatoren oder Speicherkatalysatoren eingesetzt, in welchen mittels selektiver katalytischer Reduktion Stickoxide vermindert werden. Alternativ oder ergänzend kann auch ein Dreiwegekatalysator eingesetzt werden.

Derartige Katalysatoren weisen aufgrund von Alterungseffekten mit zunehmender Lebensdauer bzw. Einsatzzeit eine verminderte katalytische Reaktivität auf, sodass bestimmte Stickoxidgrenzwerte ab einer bestimmten Alterung nicht mehr eingehalten werden können. Häufig wird bei derartigen Katalysatoren für eine Reduktion der Stickoxide Harnstoff bzw. eine unter dem Handelsnamen Adblue bekannte wässrige Lösung, welche Harnstoff enthält, beigemengt, um unter Bildung von Ammoniak Stickoxide mittels selektiver katalytischer Reduktion zu vermindern.

Um mit Kraftfahrzeugen mit entsprechend gealterten Katalysatoren Stickoxidgrenzwerte gemäß aktuellen Normen, beispielsweise der Abgasnorm Euro 6c, zu erreichen, ist es somit erforderlich, gealterte Katalysatoren entweder durch neue zu ersetzen oder die gealterten Katalysatoren derart wiederaufzubereiten, dass diese eine zur Grenzwerterreichung ausreichende katalytische Reaktivität bzw. katalytische Funktion aufweisen und gleichzeitig kein Ammoniakschlupf auftritt. Bislang existiert jedoch kein Verfahren, mit welchem ein solcher Nachweis auf effiziente Weise durchgeführt werden kann.

Hier setzt die Erfindung an. Aufgabe der Erfindung ist es, ein Verfahren der eingangs genannten Art anzugeben, mit welchem eine katalytische Funktion eines entsprechenden Gegenstandes auf besonders effiziente Weise gemessen werden kann.

Weiter soll eine Vorrichtung zur Durchführung eines solchen Verfahrens angegeben werden.

Die erste Aufgabe wird durch ein Verfahren der eingangs genannten Art gelöst, bei welchem der Gegenstand zusätzlich mit einem Reaktionsmittel, welches eine katalytische Reaktion im Gegenstand zur Reduktion des Stickoxides im Prüfgas bewirkt, beaufschlagt wird, um die katalytische Funktion des Gegenstandes unter Einwirkung des Reaktionsmittels und/oder eine HC-Light-off-Temperatur zu bestimmen.

Im Rahmen der Erfindung wurde erkannt, dass die katalytische Funktion eines wiederaufbereiteten Gegenstandes, welcher zur Wiederaufbereitung aus einem Abgastrakt eines Kraftfahrzeuges, in welchem dieser zur Abgasnachbehandlung eingesetzt war, ausgebaut ist, auf einfache Weise auch außerhalb des Abgastraktes des Kraftfahrzeuges beispielsweise in einer Prüfvorrichtung analysiert werden kann, indem der Gegenstand einerseits mit einem Prüfgas, welches Stickoxid und/oder Kohlenwasserstoffe enthält, und andererseits mit dem Reaktionsmittel beaufschlagt wird, welches im Katalysator eine katalytische Reaktion zur Reduktion des Stickoxides im Prüfgas bewirkt bzw. verstärkt. Alternativ oder ergänzend kann eine HC-Light-off-Temperatur bzw. eine Kohlenwasserstoffumsetzung im Gegenstand bei unterschiedlichen Temperaturen unter Einwirkung des Reaktionsmittels bestimmt werden, um die katalytische Funktion des Gegenstandes besonders genau zu bestimmen und den Gegenstand genau charakterisieren zu können. Als HC-Light-off-Temperatur wird jene Temperatur bezeichnet, ab welcher eine signifikante Umsetzung der Kohlenwasserstoffe im Katalysator erfolgt. Beispielsweise kann ein 50 %-Light-off-Punkt bestimmt werden, welcher einer Temperatur entspricht, ab welcher 50 % der Schadstoffe, insbesondere 50 % der zugeführten Kohlenwasserstoffe im Katalysator umgewandelt werden. Mit dem erfindungsgemäßen Verfahren kann somit die Kohlenwasserstoff- bzw. HC-Umsetzung bei unterschiedlichen Temperaturen unter Einwirkung des Reaktionsmittels beurteilt werden, um mit dem Gegenstand bei Einsatz in einem Kraftfahrzeug erreichbare Abgasgrenzwerte zu bestimmen. So weist ein gealterter Gegenstand zur Abgasreinigung wie ein Katalysator beispielsweise eine höhere Light-off-Temperatur auf als ein neuer oder wiederaufbereiteter Gegenstand. Über die Bestimmung der Light-off-Temperatur oder eines 50 %-Light-off-Punktes kann somit eine Klassifizierung des Gegenstandes für die weitere Verwendung erfolgen, wobei höherwertigere Gegenstände natürlich eine niedrigere Light-off-Temperatur bzw. einen 50 % Light-off-Punkt bei einer niedrigeren Temperatur aufweisen.

So kann dann beispielsweise mit einer Vorrichtung, in welcher der Gegenstand nach einer Wiederaufbereitung zur Prüfung der katalytischen Funktion angeordnet wird, auf einfache und effiziente Weise geprüft werden, ob eine katalytische Funktion bei erneutem Einsatz des Gegenstandes in einem Kraftfahrzeug unter Verwendung eines Reaktionsmittels wie beispielsweise Harnstoff bzw. Adblue gegeben ist. Dadurch wird auf effiziente Weise vermieden, dass wiederaufbereitete Gegenstände erneut in Kraftfahrzeuge eingesetzt werden, welche trotz Wiederaufbereitung keine ausreichende katalytische Reaktivität aufweisen bzw. nicht ausreichend wiederaufbereitet wurden, beispielsweise weil diese derart beschädigt sind, dass eine bessere Wiederaufbereitung nicht möglich ist. Somit wird eine wesentliche Verbesserung gegenüber dem Stand der Technik erreicht, wonach es vorkommen kann, dass eine mangelnde katalytische Funktion eines wiederaufbereiteten Gegenstandes erst bei Einsatz im Kraftfahrzeug durch eine entsprechende Abgasmessung festgestellt wird, was jedoch mit hohem Aufwand und entsprechenden Kosten verbunden ist.

Günstig ist es, wenn der Gegenstand zunächst nur mit dem Prüfgas beaufschlagt wird, vorzugsweise für zumindest zehn Sekunden, insbesondere für zumindest eine Minute, wonach der Gegenstand zusätzlich mit dem Reaktionsmittel beaufschlagt wird, vorzugsweise für zumindest zehn Sekunden, insbesondere für zumindest eine Minute, wobei ein zeitlicher Verlauf einer katalytischen Reaktion im Gegenstand erfasst wird, insbesondere bis zumindest zehn Sekunden, vorzugsweise bis zumindest eine Minute, nach Beendigung der Beaufschlagung des Gegenstandes mit dem Reaktionsmittel. Dadurch kann eine Funktion des Gegenstandes besonders genau bestimmt werden. So setzt eine selektive katalytische Reduktion im Katalysator immer erst nach einer bestimmten Zeit ein, nachdem das Reaktionsmittel in den Katalysator eingebracht wurde, weil das Reaktionsmittel zunächst in eine Beschichtung und/oder ein Substrat des Katalysators eingespeichert werden muss, wonach in der Beschichtung bzw. dem Substrat die entsprechenden Reaktionen erfolgen. Mit dem erfindungsgemäßen Verfahren ist es somit möglich, Einspeichereffekte des Prüfgases in die Beschichtung und/oder das Substrat des zu prüfenden Gegenstandes zu erfassen. Wird die Temperatur daraufhin geändert, kann das Ein- oder Ausspeichern von Reaktionsmittel, insbesondere von Ammoniak, in der Beschichtung gemessen werden. Mit einer Messung der relevanten Bestandteile des Prüfgases, insbesondere von Stickoxiden im Prüfgas vor und nach einem Passieren des Gegenstandes bzw. in einem Strömungspfad vor und nach dem Gegenstand kann weiter ermittelt werden, welche katalytische Reaktivität nach Beendigung einer Beimengung des Reaktionsmittels, üblicherweise Harnstoff bzw. Ammoniak, mit dem Gegenstand noch erreichbar ist. Es kann somit eine Aussage darüber abgegeben werden, welche Reaktionsmittelmenge bei einem Einsatz des Gegenstandes in einem Kraftfahrzeug erforderlich ist, um bestimmte Abgasgrenzwerte zu erreichen.

Es hat sich bewährt, dass Stickoxide, insbesondere Stickstoffmonoxid und/oder Stickstoffdioxid, sowohl in einer Zuleitung, durch welche das Prüfgas auf den Gegenstand aufgebracht wird, als auch in einer Ableitung, welche das Prüfgas nach einem Passieren des Gegenstandes durchströmt, gemessen werden. Über die Messung von Stickoxiden in einer Strömung des Prüfgases vor und nach dem Gegenstand kann auf einfache Weise ermittelt werden, welcher Anteil der Stickoxide im Gegenstand mit selektiver katalytischer Reduktion reduziert wurde, um auf eine katalytische Funktion des Gegenstandes zu schließen.

Es hat sich bewährt, dass Stickoxide in der Zuleitung und in der Ableitung vor, während und nach einer Beaufschlagung des Gegenstandes mit dem Reaktionsmittel gemessen werden, vorzugsweise kontinuierlich. Bevorzugt werden ein zeitlicher Verlauf von Stickoxiden sowohl in der Zuleitung als auch in der Ableitung sowie ein zeitlicher Verlauf einer Beimengung des Reaktionsmittels, welches üblicherweise gemeinsam mit dem Prüfgas aufgebracht wird, gemessen, um auf eine katalytische Funktion des Gegenstandes zu schließen. In der Regel werden sowohl in der Zuleitung, über welche das Prüfgas und das Reaktionsmittel dem Gegenstand zugeführt werden, als auch in der Ableitung, durch welche ein dem Gegenstand zugeführtes Gas den Gegenstand wieder verlässt, eine Konzentration des Reaktionsmittels sowie der Stickoxide gemessen. Natürlich ist auch eine instationäre Messung möglich.

Natürlich können ergänzend auch weitere Gasbestandteile, welche in einem Abgas eines Verbrennungsmotors auftreten, aufgebracht und gleichzeitig mit Stickoxiden in der Zuleitung und der Ableitung gemessen werden, beispielsweise Kohlenmonoxid und Kohlenwasserstoffe.

Günstig ist es, wenn das Reaktionsmittel Ammoniak und/oder einen zur Bildung von Ammoniak im Gegenstand geeigneten Bestandteil, insbesondere Harnstoff, enthält oder aus Ammoniak oder Harnstoff besteht. Das Reaktionsmittel kann in das Prüfgas eingebracht und dem Gegenstand über eine gemeinsame Zuleitung zugeführt oder separat auf den Gegenstand aufgebracht werden. Das Reaktionsmittel kann auch Methan enthalten oder aus Methan bestehen.

Bevorzugt ist vorgesehen, dass das Reaktionsmittel vor einer Beaufschlagung des Gegenstandes mit dem Prüfgas vermischt wird. Üblicherweise werden das Reaktionsmittel und das Prüfgas durch eine gemeinsame Zuleitung auf den Gegenstand aufgebracht und in der Zuleitung möglichst homogen vermischt.

Um eine homogene Vermischung des üblicherweise flüssig oder gasförmig ausgebildeten Reaktionsmittels mit dem Prüfgas vor Beaufschlagung des Gegenstandes zu erreichen, ist üblicherweise in einer gemeinsamen Zuleitung, über welche sowohl das Prüfgas als auch das Reaktionsmittel aufgebracht werden, eine Mischeinrichtung, insbesondere ein Mixer zur Homogenisierung des Fluidgemisches bzw. Gasgemisches vorgesehen. Die Mischeinrichtung kann beispielsweise eine Mischkammer mit Strömungswirbeln bzw. Turbulenzen erzeugenden Einrichtungen und/oder einen oder mehrere Ventilatoren aufweisen. Bei Dieselkraftfahrzeugen wird üblicherweise das Harnstoff enthaltende Lösungsmittel bzw. Adblue in den Abgasstrom eingebracht und dort insbesondere zu Ammoniak umgewandelt. Durch eine entsprechende Vermischung des Prüfgases mit dem Reaktionsmittel kann somit auch bei erfindungsgemäßen Verfahren ein der Realität entsprechender Betrieb erreicht und somit eine Messung unter annähernd realen Betriebsbedingungen durchgeführt werden, selbst wenn das erfindungsgemäße Verfahren in einem abgeschlossenen Gehäuse im Rahmen eines automatisierten Verfahrens zur Reinigung und Wiederaufbereitung eines entsprechenden Gegenstandes durchgeführt wird.

Das erfindungsgemäße Verfahren kann grundsätzlich sowohl an einem in einem Abgastrakt eines Kraftfahrzeuges eingebauten Gegenstand als auch an einem aus dem Abgastrakt ausgebauten Gegenstand durchgeführt werden. Ferner kann das Verfahren auch mit mehreren seriell oder parallel geschalteten Gegenständen umgesetzt werden.

Vorteilhaft ist es, wenn in einer Reaktionsmittelzuleitung, durch welche der Gegenstand mit dem Reaktionsmittel beaufschlagt wird, und optional auch in der Ableitung, welche das Prüfgas nach einem Passieren des Gegenstandes durchströmt, eine Konzentration von Ammoniak und/oder einem zur Bildung von Ammoniak geeigneten Bestandteil gemessen wird, wobei vorzugsweise mehrere Messungen zeitlich versetzt durchgeführt werden, um einen zeitlichen Verlauf zu bestimmen. In der Regel ist die Reaktionsmittelzuleitung auch die Zuleitung, über welche das Prüfgas auf den Gegenstand aufgebracht wird, sodass die Messung einer Gaszusammensetzung in dieser gemeinsamen Zuleitung ausreichend sein kann, um eine Zusammensetzung sowohl des Prüfgases als auch des Reaktionsmittels bzw. eine Konzentration von Stickoxiden und Ammoniak oder Harnstoff in dem auf den Gegenstand aufgebrachten Gas zu bestimmen.

Um eine besonders gute Aussage über ein Verhalten des Gegenstandes bei einem Betrieb in einem Abgastrakt eines Kraftfahrzeuges zu erhalten, ist bevorzugt vorgesehen, dass der Gegenstand zumindest in einem Teilbereich während zumindest eines Teiles des Verfahrens eine Temperatur aufweist, welche einer üblichen Einsatztemperatur des Gegenstandes bei bestimmungsgemäßem Betrieb bei einer Reinigung eines Abgases eines Verbrennungsmotors entspricht, insbesondere 180 °C bis 600 °C. Bevorzugt wird der Gegenstand durch aufgeheizte Luft oder ein Gas bestimmter Zusammensetzung, beispielsweise zur Verhinderung exothermer Reaktionen Kohlendioxid oder dergleichen, auf die gewünschte Temperatur gebracht. In der Regel wird der Gegenstand auf die gewünschte Temperatur gebracht, bevor das Prüfgas auf den Gegenstand aufgebracht wird, um mit geringem Prüfgaseinsatz aussagekräftige Messergebnisse zu erreichen. Vorzugsweise bleibt der Gegenstand oder, sofern nur ein Teilbereich des Gegenstandes untersucht wird, der Teilbereich auf der gewünschten Temperatur, bis die Messung abgeschlossen ist, insbesondere für zumindest zehn Minuten.

Günstig ist es, wenn das Prüfgas mit einer Temperatur auf den Gegenstand aufgebracht wird, welche einer üblichen Temperatur eines Abgases entspricht, mit welchem der Gegenstand bei bestimmungsgemäßem Betrieb beaufschlagt wird, insbesondere 180 °C bis 600 °C, vorzugsweise 200 °C bis 500 °C, besonders bevorzugt 250 °C bis 350 °C. Dies gewährleistet besonders aussagekräftige Messergebnisse. So kann der gemessene Gegenstand dann nicht nur danach klassifiziert werden, ob bestimmte Abgasgrenzwerte erreichbar sind, sondern auch danach, bei welchen Temperaturen die Abgasgrenzwerte erreicht werden können, zumal bei höheren Temperaturen eine Reaktivität von Katalysatoren üblicherweise höher ist. Dadurch kann auf einen zur Erreichung der Abgasgrenzwerte erforderlichen Treibstoffverbrach geschlossen werden.

Der Gegenstand kann beispielsweise elektrisch auf eine entsprechende Temperatur aufgeheizt werden. Es kann auch vorgesehen sein, dass der Gegenstand über ein heißes Gas, vorzugsweise erhitzte Luft, auf die entsprechende Temperatur gebracht wird. Hierzu kann beispielsweise in einer Zuleitung, über welche dem Gegenstand ein Gas zugeführt wird, eine elektrische Heizung zur geregelten Aufheizung des Gases und somit des Gegenstandes vorgesehen sein. Zur Regelung kann eine Temperatur des Gegenstandes direkt oder indirekt erfasst werden, beispielsweise optisch oder mit einem oder mehreren am Gegenstand angebrachten Sensoren. Dadurch kann eine besonders genaue Aussage über tatsächliches Verhalten getätigt werden, weil eine katalytische Reaktivität abhängig von einer Temperatur der Beschichtung ist.

Weiter kann natürlich auch eine Regelung zur Einbringung einer Menge des Prüfgases, welches Stickoxide und/oder Kohlenwasserstoffe enthalten kann, vorgesehen sein. Dadurch kann eine gezielte Beaufschlagung des Gegenstandes mit Prüfgas, insbesondere mit Stickoxiden und/oder Kohlenwasserstoffen erfolgen, um ein Verhalten bei realem Betrieb besonders genau ermitteln zu können.

Um eine besonders genaue Aussage über eine katalytische Funktion des Gegenstandes zu erhalten, kann vorgesehen sein, dass eine Temperatur des Gegenstandes während der Messung verändert wird, insbesondere um zumindest 10 °C. Dadurch ist auch eine katalytische Funktion des Gegenstandes bei unterschiedlichen Temperaturen bestimmbar. Weiter kann dadurch auch eine besonders kurze Prüfzeit erreicht werden, wenn der Gegenstand während des Aufheizens oder Abkühlens analysiert wird Durch die Änderung der Temperatur über der Zeit kann ein charakteristisches Einspeichern und Ausspeichern von Gasen in den Gegenstand bzw. in eine Beschichtung oder ein Substrat des Gegenstandes erfasst werden.

Zur Bestimmung einer katalytischen Funktion einzelner Teilbereiche des Gegenstandes ist vorzugsweise vorgesehen, dass das Prüfgas dem Gegenstand über eine Zuleitung zugeführt wird, mit welcher nur ein Teilbereich einer Stirnseite des Gegenstandes beaufschlagt wird, um eine katalytische Funktion eines Teilbereiches des Gegenstandes zu erfassen. Der Teilbereich kann beispielsweise weniger als 80 %, insbesondere weniger als 50 %, vorzugsweise weniger als 10 % einer Oberfläche einer Stirnseite des Gegenstandes umfassen. In einem Kraftfahrzeug eingesetzte Filter und Katalysatoren weisen in der Regel einen etwa kreisrunden Querschnitt und einen Durchmesser von weniger als 40 cm auf. Die Zuleitung ist somit endseitig bevorzugt zur Aufbringung von in der Zuleitung zugeführtem Gas auf einen entsprechend kleinen Bereich von beispielsweise weniger als 160 cm² ausgebildet. Durch eine Messung der Stickoxide und des Reaktionsmittels in der Zuleitung sowie an einer in Strömungsrichtung dem Gegenstand nachgelagerten Position kann somit die katalytische Funktion einzelner Teilbereich bestimmt werden. Es kann dann festgestellt werden, ob und gegebenenfalls welcher Teilbereich des Gegenstandes noch nicht ausreichend wiederaufbereitet ist, um gezielt einzelne Teilbereiche zu regenerieren, sodass ein effizientes Verfahren der Wiederaufbereitung gewährleistet werden.

Es versteht sich, dass das Prüfgas grundsätzlich über jede Stirnseite des Gegenstandes und in jeder Strömungsrichtung durch den Gegenstand aufgebracht werden kann. Es könnte grundsätzlich auch vorgesehen sein, dass das Prüfgas über beide Stirnflächen gleichzeitig aufgebracht wird.

Üblicherweise ist vorgesehen, dass das Prüfgas sequenziell unterschiedlichen Teilbereichen des Gegenstandes zugeführt wird, um eine katalytische Funktion des gesamten Gegenstandes zu bestimmen. Hierzu kann die Zuleitung für das Prüfgas relativ zu einer Stirnseite des Gegenstandes verfahrbar ausgebildet sein, insbesondere mit einem mehrachsig verfahrbaren Roboter bzw. einem kartesischen Roboter relativ zum Gegenstand verfahrbar. Bevorzugt ist die Zuleitung in sämtlichen Raumrichtungen, insbesondere in einer Ebene parallel zu Stirnseiten des in der Regel etwa zylinderförmig ausgebildeten Gegenstandes, über welche Gas in den Gegenstand einbringbar und austragbar ist, frei verfahrbar, um Gegenstände unterschiedlicher Größe analysieren zu können.

In der Regel wird eine Zusammensetzung des Gases, mit welchem der Gegenstand beaufschlagt wird und welches sich üblicherweise aus Luft, einem Stickstoff und/oder Kohlenwasserstoffe zur Prüfung einer Light-off-Temperatur enthaltenden Prüfgas sowie zumindest in bestimmten Zeitabschnitten einem Reaktionsmittel zusammensetzt oder diese Bestandteile enthält, sowohl in der Zuleitung als auch in der Ableitung mit einem Gasanalysemessgerät analysiert, welches beispielsweise als UV-Spektrometer, als Fourier-Transform-Infrarotspektrometer oder als chemoelektrische Messzelle ausgebildet sein kann. Vorzugsweise wird ein UV-Spektrometer mit einer Wellenlänge von 200 nm bis 600 nm eingesetzt, da dieses Spektrum eine hohe Sensitivität zu Ammoniak hat und somit die Konzentration der relevanten Bestandteile des Gases sehr genau aufgelöst werden kann. Ferner kann auch eine Einrichtung zur Erfassung von Partikeln, insbesondere ein Partikelzähler, sowohl in der Zuleitung als auch in der Ableitung vorgesehen sein, um eine Partikelfangrate des Gegenstandes zu erfassen.

Bevorzugt erfolgt eine Beurteilung einer katalytischen Funktion des Gegenstandes, indem ein oder mehrere Funktionsgrenzwerte aus gemessenen Werten von Stickoxiden vor und nach dem Gegenstand in Verbindung mit der zugeführten Menge an Reaktionsmittel erfasst und eine Korrelation mit einer Funktion des Gegenstandes an einem Motor bei bestimmungsgemäßer Verwendung des Gegenstandes gebildet wird, um anhand der gemessenen Werte auf die Funktion des Gegenstandes bei bestimmungsgemäßer Verwendung schließen zu können.

Beispielsweise kann ein Funktionsgrenzwert aus einem Verhältnis von Stickoxiden in der Ableitung zu Stickoxiden in der Zuleitung bei einer definierten Menge von zugeführtem Reaktionsmittel und einer bestimmten Temperatur mit den bei Einsatz desselben Gegenstandes in einem Kraftfahrzeug erreichten Abgaswerten gegenübergestellt werden, um insbesondere bei Gegenständen desselben Typs anhand des mit dem erfindungsgemäßen Verfahren ermittelten Funktionsgrenzwertes eine zuverlässige Aussage über mit dem Gegenstand bei Einsatz im Fahrzeug erreichbare Grenzwerte tätigen zu können. Es kann dann auch die Messung an einem Teilbereich eines Gegenstandes ausreichend sein, um über Korrelationen mit bereits gemessenen Gegenständen wie gebrauchten oder neuen Partikelfiltern auf mit dem entsprechenden Gegenstand erreichbare Abgasgrenzwerte schließen und den gemessenen Gegenstand bereits nach kurzer Prüfung, beispielsweise in einem Prüfzyklus von weniger als zehn Minuten, klassifizieren und eine Standzeit bei bestimmungsgemäßem Einsatz in einem Fahrzeug angeben zu können.

Hierzu kann vorgesehen sein, dass Abgase von Kraftfahrzeugen, in welchen einzelne wiederaufbereitete Gegenstände eingesetzt sind, gemessen werden. Weiter können auch Abgasdaten von Fahrzeugen bzw. allgemein von Verbrennungskraftmaschinen, aus deren Abgastrakt ein oder mehrere Gegenstände zur Wiederaufbereitung ausgebaut wurden, in Verbindung mit gemessenen Daten vor der Wiederaufbereitung gebracht werden, um eine Korrelation zu bestimmen. Vorzugsweise werden Messergebnisse von mehreren erfindungsgemäß analysierten Gegenständen in einer Datenbank mit eindeutiger Zuordnung zum Gegenstand gespeichert, sodass bei mehrmaliger Wiederaufbereitung ein zeitlicher Verlauf der erreichten Funktion ermittelt werden kann. Über entsprechende Daten kann dann eine erwartete Restlebensdauer nach einer Wiederaufbereitung prognostiziert werden. Dadurch ist unmittelbar nach der Wiederaufbereitung anhand des gemessenen Funktionsgrenzwertes und der Korrelation eine Klassifikation des wiederaufbereiteten Gegenstandes in gut und schlecht sowie die Angabe einer erwarteten Restlebensdauer möglich. Dadurch kann die katalytische Funktion eines wiederaufbereiteten Gegenstandes innerhalb weniger Minuten mit hoher Genauigkeit bestimmt werden.

Die weitere Aufgabe wird erfindungsgemäß durch eine Vorrichtung der eingangs genannten Art gelöst, bei welcher zusätzlich zum Prüfgas mit der Vorrichtung ein Reaktionsmittel auf den Gegenstand aufbringbar ist.

Üblicherweise ist die Vorrichtung zur Durchführung eines erfindungsgemäßen Verfahrens ausgebildet und wird für die Durchführung eines erfindungsgemäßen Verfahrens eingesetzt.

Die Vorrichtung weist üblicherweise ein Gehäuse auf, in welchem der Gegenstand angeordnet werden kann. Das Gehäuse ist in der Regel derart ausgebildet, dass der Gegenstand so zwischen einer Ableitung und einer Zuleitung positionierbar ist, dass ein über die Zuleitung zugeführtes Gas bzw. Gasgemisch aus Luft, Prüfgas und Reaktionsmittel, durch den Gegenstand bewegbar und anschließend im Wesentlichen vollständig in die Ableitung einbringbar ist. Hierzu ist die Ableitung bevorzugt endseitig mit einem trichterförmigen Gasfänger mit einer umlaufenden Dichtung ausgebildet, über welchen sämtliches aus dem Gegenstand austretendes Gas in die Ableitung geleitet wird.

Die Zuleitung weist endseitig in der Regel eine Dichtung auf, um zu gewährleisten, dass die Zuleitung derart dicht auf den Gegenstand, insbesondere auf eine Stirnseite eines Partikelfilters, aufpressbar ist, dass aus der Zuleitung austretendes Gas im Wesentlichen vollständig durch den Gegenstand, insbesondere durch Kanäle eines Partikelfilters, gepresst werden kann und nicht seitlich am Gegenstand vorbeiströmt.

Das Gehäuse ist ferner bevorzugt derart ausgebildet, dass ein Gasaustausch zwischen einem Inneren des Gehäuses und einer Umgebung im Wesentlichen nur über mit der Zuleitung bzw. mit der Ableitung verbundene Leitungen möglich ist. Dadurch kann die Vorrichtung auch in einer industriellen Anlage beispielsweise zum Reinigen und Wiederaufbereiten von Partikelfiltern oder einer Kfz-Werkstätte angeordnet sein, ohne dass schädliche Gase in die Umgebung strömen.

Der Gegenstand ist üblicherweise derart in der Vorrichtung positionierbar, dass das Prüfgas etwa vertikal durch den Gegenstand strömt, wobei auch eine wechselnde Strömungsrichtung vorgesehen sein kann, um über eine Länge des Gegenstandes unterschiedliche katalytische Reaktivitäten zu ermitteln.

Ferner ist im Gegenstand üblicherweise eine Zuleitung zur Beaufschlagung eines Teilbereiches einer Stirnseite des Gegenstandes mit Prüfgas und Reaktionsmittel mehrachsig bewegbar angeordnet. Die Zuleitung kann endseitig eine Dichtung aufweisen, mit welcher die Zuleitung dicht an den Gegenstand angepresst werden kann, sodass gewährleistet ist, dass aus der Zuleitung austretendes Gas in die durch die Dichtung definierte Fläche des Gegenstandes einströmt und ein exakt definierter Bereich vermessen werden kann. Üblicherweise weist die Zuleitung endseitig einen kleineren Querschnitt als der zu untersuchende Gegenstand, beispielsweise ein Partikelfilter für ein Diesel-Kraftfahrzeug mit einem Durchmesser von weniger als 40 cm, auf.

Weiter kann in der Zuleitung ein Heizer, insbesondere ein elektrischer Heizer, vorgesehen sein, um das über die Zuleitung auf den Gegenstand aufgebrachte Gas auf eine vordefinierte Temperatur, üblicherweise 250 °C bis 500 °C, zu bringen, sodass der Gegenstand gezielt temperiert werden kann. Normalerweise ist der Heizer über eine am Gegenstand gemessene Temperatur regelbar, sodass gezielt Temperaturänderungen am Gegenstand mit dem Heizer erzeugbar sind.

Ein zu untersuchender Gegenstand wie ein Katalysator oder ein Partikelfilter eines Kraftfahrzeuges weist üblicherweise eine Vielzahl von Kanälen auf, welche sich zwischen einer ersten Stirnseite und einer zweiten Stirnseite erstrecken. Das Prüfgas sowie das Reaktionsmittel werden vorzugsweise an einer ersten Stirnseite auf den Gegenstand aufgebracht und treten an einer zweiten Stirnseite des Gegenstandes, gegebenenfalls nach einer chemischen Reaktion, wieder aus dem Gegenstand aus. Das üblicherweise aus Luft, dem Prüfgas und temporär einem Reaktionsmittel wie Ammoniak bestehende Gasgemisch wird üblicherweise über die dicht auf die erste Stirnseite aufgepresste Zuleitung in den Gegenstand eingebracht. In der Regel ist endseitig an der Zuleitung eine umlaufende Dichtung vorgesehen, sodass das gesamte durch die Zuleitung transportierte Gas in den Gegenstand geleitet und durch den Gegenstand transportiert wird. Der in der Regel als Partikelfilter ausgebildete Gegenstand kann porös oder gasdurchlässig ausgebildet sein.

An der zweiten Stirnseite, welche in der Regel gegenüber der ersten Stirnseite angeordnet ist, kann ein beispielsweise trichterförmiger Gasfänger mit einer umlaufenden Dichtung vorgesehen sein, welcher die gesamte zweite Stirnfläche dichtend umfasst, sodass sämtliches aus einem oder mehreren Kanälen der zweiten Stirnseite austretendes Gas über den Gasfänger in eine Ableitung geleitet wird, durch welche das Gas über eine Absaugung aus der Vorrichtung ausgeleitet werden kann, gegebenenfalls zu einer Filteranlage oder dergleichen. Durch den Gasfänger wird somit sämtliches aus dem Gegenstand an der zweiten Stirnfläche austretendes Gas in die Ableitung geleitet, und zwar unabhängig davon, an welchem Teilbereich der ersten Stirnfläche des Gegenstandes die Zuleitung positioniert ist. Dadurch ist sichergestellt, dass mit einer Analyse des in der Ableitung transportierten Gases jegliches Gas analysiert werden kann, welches durch den Gegenstand transportiert wurde. Wird dem Gegenstand Gas über die Zuleitung nur auf einen Teilbereich zugeführt, ist anhand der Messung in der Zuleitung und der Ableitung eine katalytische Funktion des entsprechenden Teilbereiches des Gegenstandes bestimmbar.

Günstig ist es, wenn das Prüfgas über eine Zuleitung auf den Gegenstand aufbringbar ist, mit welcher Zuleitung das Prüfgas nur auf einen Teilbereich des Gegenstandes aufbringbar ist, um eine katalytische Funktion eines Teilbereiches zu bestimmen. Mit der Zuleitung ist das Prüfgas bzw. ein Gemisch aus Prüfgas, Luft und gegebenenfalls Reaktionsmittel auf eine definierte Anzahl an Kanälen einer Stirnseite des Gegenstandes aufbringbar, während gleichzeitig andere Kanäle nicht mit dem Gasgemisch beaufschlagt werden. Dies wird üblicherweise erreicht mit einer Zuleitung, welche einen kleineren Querschnitt als die erste Stirnfläche aufweist und welche Zuleitung endseitig von einer Dichtung umgeben ist, dass bei einem Andrücken der Zuleitung auf die erste Stirnseite nur die innerhalb der Dichtung in die Stirnseite mündenden Kanäle mit einem durch die Zuleitung strömenden Gas beaufschlagt werden, während die außerhalb der Dichtung in die erste Stirnseite mündenden Kanäle nicht mit dem Gas bzw. Gasgemisch beaufschlagt werden.

Eine Strömungsgeschwindigkeit des Prüfgases kann der Strömungsgeschwindigkeit im Originaleinsatz, beispielsweise in einem Abgastrakt eines Kraftfahrzeuges, entsprechen, um vergleichbare Raumgeschwindigkeiten zu erhalten und ähnliche Reaktionsgeschwindigkeiten einstellen zu können.

Üblicherweise ist die Zuleitung mit einer Positioniervorrichtung verfahrbar, um sequenziell katalytische Funktionen unterschiedlicher Teilbereiche zu bestimmen.

Zur Erfassung von Stickstoffmonoxid, Stickstoffdioxid und dergleichen sowie dem Reaktionsmittel, insbesondere Ammoniak, in einer Gasströmung vor und nach dem Gegenstand sind üblicherweise in der Zuleitung und/oder in der Ableitung Gasanalysemessgeräte vorgesehen. Ein Gasanalysemessgerät kann insbesondere als UV-Spektrometer mit einer Wellenlänge von 200 nm bis 600 nm ausgebildet sein, um Stickstoffmonoxid, Stickstoffdioxid sowie Ammoniak auf besonders genaue Weise zu erfassen. Weiter können sowohl in der Zuleitung als auch in der Ableitung Temperatursensoren vorgesehen sein. Darüber hinaus kann auch vorgesehen sein, dass eine Temperatur an einer Oberfläche des Gegenstandes gemessen wird, beispielsweise über ein optisches Messverfahren.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine erfindungsgemäße Vorrichtung in schematischer Darstellung;
Fig. 2 beispielhaft zeitliche Verläufe von in einem erfindungsgemäßen Verfahren ermittelten Messwerten.

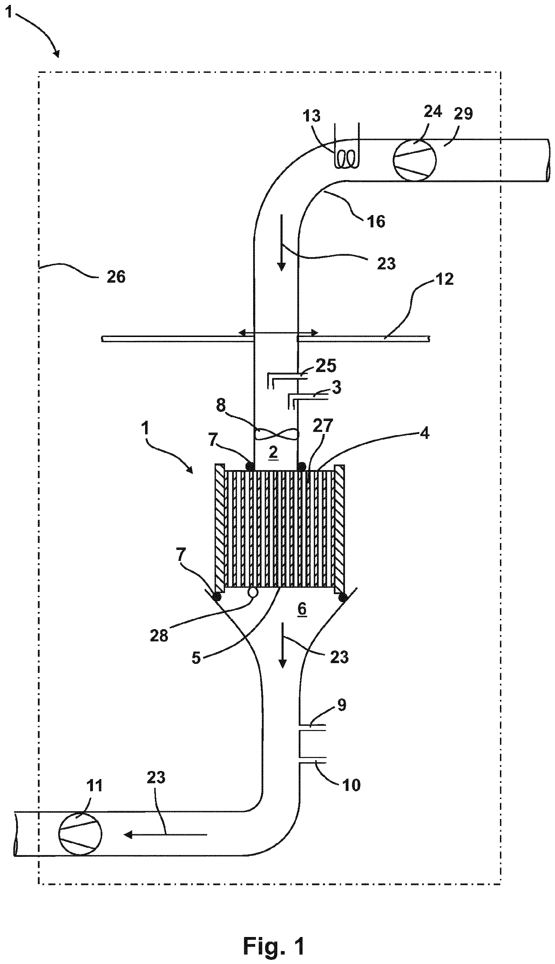

Fig. 1 zeigt eine erfindungsgemäße Vorrichtung zur Durchführung eines erfindungsgemäßen Verfahrens. Wie ersichtlich weist die Vorrichtung eine Zuleitung 2 auf, über welche Luft, ein Prüfgas sowie ein Reaktionsmittel, üblicherweise Ammoniak, auf einen Teilbereich einer ersten Stirnfläche eines hier als Partikelfilter 1, der mit einer katalytischen Beschichtung versehen ist, eines Diesel-Kraftfahrzeuges ausgebildeten Gegenstandes aufbringbar ist. Luft wird dabei über eine Luftzuführung 29 zugeführt und anschließend mit einem Kompressor 24 oder dergleichen verdichtet. Dem Kompressor 24 nachgelagert ist eine als elektrischer Heizer 13 ausgebildete Heizeinrichtung angeordnet, um die zugeführte Luft aufzuheizen und den Gegenstand für die Prüfung der Funktion der katalytischen Reaktivität auf eine vordefinierte Temperatur zu bringen bzw. die katalytische Reaktivität bei verschiedenen Temperaturen zu prüfen.

Der Luft wird ein Prüfgas, welches Stickoxide enthält, über eine Prüfgaszuleitung 25 beigemengt, sodass ein Gemisch aus Luft und Prüfgas beispielsweise analog zu einem Abgas einer Maschine, in welcher der Partikelfilter 1 üblicherweise zur Abgasreinigung eingesetzt ist, ausgebildet sein kann, insbesondere analog zu einem Abgas eines Dieselmotors eines Kraftfahrzeuges. Um ein besonders einfaches Verfahren zu erreichen, ist vorzugsweise vorgesehen, dass das aufgebrachte Gas nicht durch eine Verbrennung in einem Verbrennungsmotor erzeugt wurde.

Weiter wird dem Gemisch aus Luft und Prüfgas zumindest temporär ein vorzugsweise gasförmiges Reaktionsmittel, insbesondere Ammoniak oder ein Kohlenwasserstoffgas, über eine Reaktionsmittelzuleitung 3 zugeführt, welches eine die Stickoxide im Partikelfilter 1 bzw. in einer Beschichtung des Partikelfilters 1 reduzierende chemische Reaktion bewirkt, um ein Verhalten des Partikelfilters 1 bzw. der katalytischen Beschichtung desselben zu analysieren. Das Gemisch aus Luft, dem Prüfgas und dem Reaktionsmittel wird somit mit dem Kompressor 24 durch den Partikelfilter 1 gepresst. Weiter ist in Strömungsrichtung 23 dem Partikelfilter 1 nachgelagert eine Absaugung 11 vorgesehen, mit welcher das Gemisch aus dem Partikelfilter 1 gesaugt werden kann.

In Strömungsrichtung 23 dem zu analysierenden Gegenstand unmittelbar nachgeordnet ist ein trichterförmiger Gasfänger 6 vorgesehen, welcher wie ersichtlich die gesamte zweite Stirnseite 5 des Gegenstandes abdeckt, sodass jegliches aus der zweiten Stirnseite 5 austretendes Gas durch den Gasfänger 6 in die Ableitung gelangt.

Sowohl in der Zuleitung 2 als auch in der Ableitung sind Gasanalysemessgeräte vorgesehen, welche als UV-Spektrometer mit einer Wellenlänge von 200 nm bis 600 nm ausgebildet sind. Ferner ist ein Partikelzähler in der Ableitung angeordnet, um eine Partikelfangrate des Gegenstandes zu bestimmen. In der Ableitung sind schematisch ein Gasanalyseanschluss 9 und ein Partikelzähleranschluss 10 dargestellt, über welche das durch den Gegenstand geströmte Gas analysiert werden kann.

Das Luft, ein Prüfgas sowie das Reaktionsmittel enthaltende Gas wird üblicherweise über die erste Stirnseite 4 unter einem Überdruck auf den Gegenstand aufgebracht und tritt an der zweiten Stirnseite 5 aus dem Gegenstand aus. Zwischen der ersten Stirnseite 4 und der zweiten Stirnseite 5 erstrecken sich wie dargestellt Kanäle 27 in Längsrichtung des Partikelfilters 1. Natürlich ist auch eine Richtungsumkehr der Gasströmung möglich. Ferner kann das Gas natürlich auch nur durch den Gegenstand gesaugt werden.

Die Zuleitung 2, welche einen kleineren Querschnitt als die erste Stirnseite 4 aufweist, ist über eine als kartesischer Roboter 12 ausgebildete Positioniervorrichtung zu verschiedenen Teilbereichen der ersten Stirnseite 4 bewegbar, sodass durch Beaufschlagung unterschiedlicher Teilbereiche und Messung einer Konzentration von Stickoxiden sowie Ammoniak in der Zuleitung 2 sowie der Ableitung auf eine katalytische Funktion bzw. einen NOx-Umsatz einzelner Teilbereiche geschlossen werden kann, beispielsweise um Teilbereiche mit nicht ausreichender Reaktivität bzw. katalytischer Funktion einer erneuten Wiederaufbereitung zu unterziehen. Die Zuleitung 2 ist hierzu über eine Dichtung 7 dicht auf die erste Stirnseite 4 aufsetzbar, sodass sichergestellt ist, dass ein aus der Zuleitung 2 austretendes Gas in den durch die Dichtung 7 eingegrenzten Bereich der ersten Stirnseite 4 bzw. die entsprechenden Kanäle 27 eintritt. Mit dem Roboter 12 ist die erste Zuleitung 2 üblicherweise in einer Ebene parallel zur ersten Stirnfläche und senkrecht zur ersten Stirnfläche frei positionierbar, sodass die Vorrichtung an Gegenstände unterschiedlichster Größen, insbesondere an verschiedene PKW- und LKW-Partikelfilter 1 anpassbar ist.

Weiter sind Temperatursensoren 28 sowohl an der ersten Stirnseite 4 als auch an der zweiten Stirnseite 5 vorgesehen, um über Temperaturänderungen auf eine katalytische Reaktivität des Katalysators schließen zu können. Schematisch ist hierzu ein Temperatursensor 28 an der zweiten Stirnseite 5 dargestellt.

Ferner ist ersichtlich, dass in der Zuleitung 2 eine als Mixer 8 ausgebildete Mischungseinrichtung zur Homogenisierung des aus Luft, Prüfgas und Ammoniak bzw. Reaktionsmittel bestehenden Gasgemisches vorgesehen ist. Dadurch wird eine realen Einsatzbedingungen in einem Kraftfahrzeug sehr ähnliche Situation erreicht, zumal in Kraftfahrzeugen Harnstoff bzw. ein entsprechendes Reaktionsmittel, in der Regel Adblue, dem Abgasstrom beigemengt wird, bevor der Abgasstrom auf den Katalysator auftrifft, sodass im Katalysator entsprechende Reaktionen zur Reduktion der Stickoxide stattfinden können.

Beim Verfahren wird der Partikelfilter 1 zunächst auf eine vordefinierte Temperatur, beispielsweise 250 °C gebracht, wonach der Partikelfilter 1 mit einem Gasgemisch mit definierter Zusammensetzung beaufschlagt wird, welches Gasgemisch Stickoxide enthält. Nach etwa einer Minute wird zusätzlich Ammoniak als Reaktionsmittel in die Zuleitung 2 eingebracht, sodass über die Zuleitung 2 Luft, Stickoxide sowie Ammoniak in den Gegenstand eingebracht werden. Sowohl in Zuleitung 2 als auch in der Ableitung wird ein zeitlicher Verlauf von Stickoxiden und Ammoniak gemessen, um eine NOx-Umsetzung der katalytischen Beschichtung beurteilen zu können. Dabei kann auch festgestellt werden, ob und gegebenenfalls wann es zu einem sogenannten NH3-Schlupf kommt, wobei Ammoniak durch den Partikelfilter 1 strömt.

Die erfindungsgemäße Vorrichtung kann ein abgeschlossenes Gehäuse 26 aufweisen, wie dies schematisch angedeutet ist, sodass das Verfahren auch mit ausgebauten Partikelfiltern 1, insbesondere mit gerade wiederaufbereiteten Partikelfiltern 1, beispielsweise im Rahmen einer industriellen Wiederaufbereitung bzw. Reinigung und Prüfung auf effiziente Weise umsetzbar ist. Beispielsweise kann dann eine automatisierte Reinigung erfolgen, bis die im erfindungsgemäßen Verfahren ermittelte katalytische Funktion nicht weiter verbessert werden kann oder eine gewünschte katalytische Reaktivität erreicht ist.

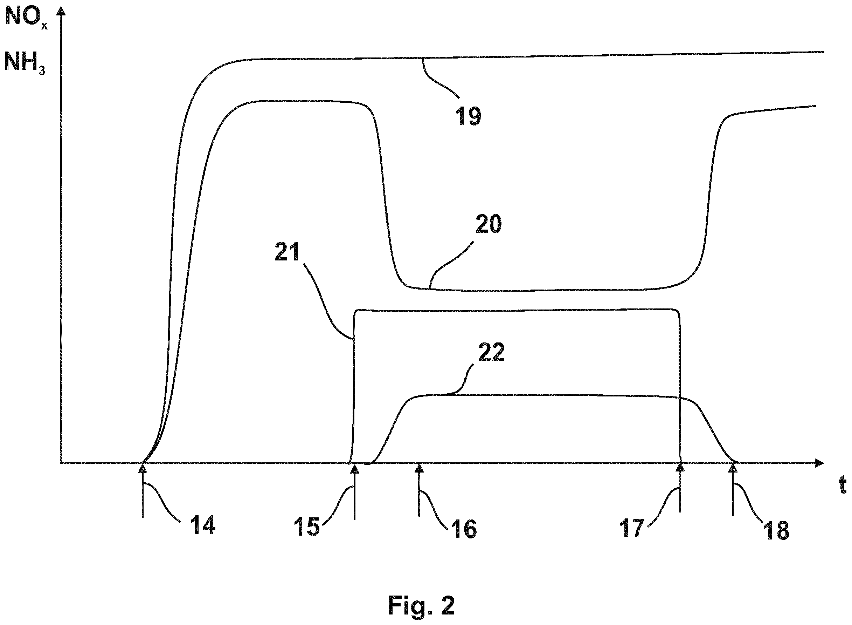

Fig. 2 zeigt einen zeitlichen Verlauf von Messwerten eines beispielhaften erfindungsgemäßen Messverfahrens. Dargestellt sind ein zeitlicher Verlauf von Stickstoffmonoxid in der Zuleitung 2, hier als NOx-Eingang 19 bezeichnet, Stickstoffmonoxid in der Ableitung, hier als NOx-Ausgang 20 bezeichnet, zugeführtem Ammoniak, hier als NH3-Dosierung 21 bezeichnet, und Ammoniak in der Ableitung, hier als NH3-Ausgang 22 bezeichnet.

Erkennbar ist eine Verzögerung zwischen dem NOx-Eingang 19 und dem NOx-Ausgang 20. Diese zeitliche Verzögerung ist durch ein Einspeicherverhalten des Partikelfilters 1 bedingt, welcher bis zu einer Sättigung zunächst Stickoxide einspeichern kann. Die gemessene zeitliche Verzögerung zwischen Stickoxiden am Eingang und Stickoxiden am Ausgang kann somit bereits als Qualitätskriterium zur Beurteilung einer Qualität des Partikelfilters 1 herangezogen werden.

Wie ersichtlich wird der Gegenstand nach einem Vorwärmen auf etwa 250 °C nach etwa vier Minuten zunächst zu einem ersten Zeitpunkt 14 mit Prüfgas, welches Stickstoffmonoxid bei einer Konzentration von etwa 200 ppm enthält, beaufschlagt, sodass Stickoxid sowohl in der Zuleitung 2, NOx-Eingang 19, als auch in der Ableitung, NOx-Ausgang 20, ansteigt.

Etwa eine Minute später wird zu einem zweiten Zeitpunkt 15 Ammoniak in die Zuleitung 2 geleitet, beispielsweise mit einer Konzentration von etwa 300 ppm. Etwa gleichzeitig beginnt der Messwert des Stickstoffmonoxids, NOx-Ausgang 20, in der Ableitung zu sinken, weil im Katalysator eine selektive katalytische Reaktion erfolgt.

Zu einem späteren, dritten Zeitpunkt 16 sinkt der NOx-Anteil in der Ableitung, hier als NOx-Ausgang 20 bezeichnet, auf ein Minimum. Ab diesem Zeitpunkt ist ein NOx-Umsatz, maximal. Ein Verhältnis von NOx-Ausgang 20 zu NOx-Eingang 19 zu diesem Zeitpunkt ist somit ein Indikator für die Denoxierfähigkeit des Partikelfilters 1 bei NH3-Eindüsung.

Weiter folgt auch ein Anstieg des Ammoniaks in der Ableitung, NH3-Ausgang 22, dem Anstieg von NH3 in der Zuleitung 2, NH3-Dosierung 21, nur zeitlich verzögert. Hintergrund ist, dass Ammoniak zwischen dem zweiten Zeitpunkt 15 und dem dritten Zeitpunkt 16 in der Beschichtung und dem Substrat des Partikelfilters 1 eingelagert wird. Häufig wird erst dann, wenn die Einlagerung beendet ist, die volle katalytische Funktion erreicht.

Nach Beendigung der Beimengung des Ammoniaks zu einem vierten Zeitpunkt 17, welcher etwa zwei Minuten nach dem zweiten Zeitpunkt 15 liegt, steigt der Anteil an Stickstoffmonoxid in der Ableitung, NOx-Ausgang 20, nur langsam wieder an. Auch das Ammoniak in der Ableitung, NH3-Ausgang 22, erreicht erst zu einem späteren, fünften Zeitpunkt 18 das Niveau von vor Beginn der NH3-Dosierung 21. Hintergrund ist, dass nach Beendigung der Beimengung des Ammoniaks zum Prüfgas Ammoniak aus der Beschichtung ausgespeichert wird, sodass die selektive katalytische Reaktion langsam abklingt. Nicht dargestellt ist, dass der Katalysator vor Aufbringung des Prüfgases auf eine Temperatur von etwa 250 °C gebracht wird, indem die zugeführte Luft aufgeheizt wird. Wie ersichtlich sinkt die Konzentration von NOx-Ausgang 20 deutlich in Gegenwart von NH3, da beispielsweise Stickstoffmonoxid zu Stickstoff, Wasser und gegebenenfalls weiteren Reaktionsprodukten reagiert.

Eine stärkere Reaktion mit höherer NOx-Umsetzung wird natürlich bei einer höheren Temperatur des Partikelfilters 1 von beispielsweise 350 °C erreicht.

Eine derartige Messreihe weist somit eine Gesamtdauer von weniger als zehn Minuten auf, innerhalb welcher eine vollständige Klassifikation des wiederaufbereiteten Gegenstandes vollautomatisiert erfolgt. Damit ist eine Prüfung der katalytischen Funktion wesentlich rascher möglich als mit Verfahren des Standes der Technik.

Entsprechende Messreihen können auch direkt an einem Motor aufgenommen und mit den im erfindungsgemäßen Verfahren ermittelten abgeglichen werden, um auf eine Korrelation zwischen im erfindungsgemäßen Verfahren gemessenen Werten und bei realem Betrieb erreichbaren Abgasgrenzwerten zu schließen.

Ein Zeitpunkt, ab welchem NH3 auch nach dem Partikelfilter 1 messbar ist, ist von einer Funktionsfähigkeit der Beschichtung bzw. einem Einlagerungsvermögen abhängig und erfolgt bei höheren Temperaturen früher. Auch dieser NH3-Schlupf bzw. der Zeitpunkt, ab welchem der NH3-Schlupf auftritt, kann als Kriterium zur Beurteilung der Qualität des Partikelfilters 1 herangezogen werden.

Weiter wird Ammoniak aus der Beschichtung ausgelagert, wenn die Temperatur des Gegenstandes absinkt. Eine solche Auslagerung führt somit bei gleichbleibender Konzentration von Ammoniak vor dem Partikelfilter 1 bzw. bei konstanter NH3-Dosierung 21 zu einem Anstieg des Ammoniaks nach dem Partikelfilter 1 bzw. zu einem Anstieg des NH3-Ausgang 22, wenn die Temperatur beispielsweise von 300 °C auf 250 °C absinkt.

Mit einem erfindungsgemäßen Verfahren bestimmte Messwerte von wiederaufbereiteten sowie neuen Gegenständen zur Abgasreinigung können mit Messwerten, welche die entsprechenden Gegenstände bei realem Einsatz in einem Kraftfahrzeug erreichen, gegenübergestellt werden, um eine Korrelation zu bestimmen. Dadurch kann auf zuverlässige Weise über die im erfindungsgemäßen Verfahren ermittelten Werte in Bezug auf die katalytische Reaktivität eine Aussage über die bei einem Betrieb in realen Kraftfahrzeugen erreichbaren Abgasgrenzwerte gegeben werden.

Mit einem erfindungsgemäßen Verfahren sowie einer Vorrichtung hierzu kann erstmals eine Aussage über die mit SCR-Katalysatoren erreichbaren Abgaswerte gegeben werden, ohne dass die Gegenstände hierfür nach einer Wiederaufbereitung wieder in ein entsprechendes Fahrzeug eingebaut werden müssen. Dabei wird auch eine Aussage über Einspeichereffekte sowie eine voraussichtliche Restlebens- und Funktionsdauer gegeben. Darüber hinaus ist erstmals eine katalytische Reaktivität für einzelne Teilbereiche des zu untersuchenden Gegenstandes bestimmbar, sodass einzelne Teilbereiche gegebenenfalls gezielt behandelt werden können, um die gewünschte Reaktivität zu erreichen. Bei Verfahren des Standes der Technik zur Messung von Abgasen eines Verbrennungsmotors kann im Unterschied dazu lediglich eine katalytische Funktion über einen gesamten Querschnitt des Filters bzw. Katalysators angegeben werden.

Das Verfahren kann sowohl mit aus einem Abgastrakt ausgebauten Gegenständen als auch mit Gegenständen durchgeführt werden, welche im Abgastrakt eines Kraftfahrzeuges angeordnet sind. Ferner ist auch eine Anwendung des Verfahrens mit in einem Canning angeordneten Gegenständen möglich, wobei üblicherweise in einem Canning ein Filter und ein Katalysator in Serie positioniert sind.

## Patentansprüche

1. Verfahren zur Messung einer katalytischen Funktion eines zur Reinigung eines Abgases eines Verbrennungsmotors geeigneten Gegenstandes, insbesondere eines Katalysators oder eines Partikelfilters (1) für ein Kraftfahrzeug oder eine Arbeitsmaschine, wobei ein Prüfgas, welches Stickoxid und/oder Kohlenwasserstoffe enthält, durch den Gegenstand bewegt wird, wobei eine Konzentration zumindest eines Bestandteiles des Prüfgases vor und nach einem Durchströmen des Gegenstandes gemessen wird, **dadurch gekennzeichnet, dass** der Gegenstand zusätzlich mit einem Reaktionsmittel, welches eine katalytische Reaktion im Gegenstand zur Reduktion des Stickoxides im Prüfgas bewirkt, beaufschlagt wird, um die katalytische Funktion des Gegenstandes unter Einwirkung des Reaktionsmittels und/oder eine HC-Light-off-Temperatur zu bestimmen.

2. Verfahren nach Anspruch 1, **dadurch gekennzeichnet, dass** der Gegenstand zunächst nur mit dem Prüfgas beaufschlagt wird, vorzugsweise für zumindest zehn Sekunden, insbesondere für zumindest eine Minute, wonach der Gegenstand zusätzlich mit dem Reaktionsmittel beaufschlagt wird, vorzugsweise für zumindest zehn Sekunden, insbesondere für zumindest eine Minute, wobei ein zeitlicher Verlauf einer katalytischen Reaktion im Gegenstand erfasst wird, insbesondere bis zumindest zehn Sekunden, vorzugsweise bis zumindest eine Minute, nach Beendigung der Beaufschlagung des Gegenstandes mit dem Reaktionsmittel.

3. Verfahren nach Anspruch 1 oder 2, **dadurch gekennzeichnet, dass** Stickoxide, insbesondere Stickstoffmonoxid und/oder Stickstoffdioxid, sowohl in einer Zuleitung (2), durch welche das Prüfgas auf den Gegenstand aufgebracht wird, als auch in einer Ableitung, welche das Prüfgas nach einem Passieren des Gegenstandes durchströmt, gemessen werden.

4. Verfahren nach einem der Ansprüche 1 bis 3, **dadurch gekennzeichnet, dass** Stickoxide in der Zuleitung (2) und in der Ableitung vor, während und nach einer Beaufschlagung des Gegenstandes mit dem Reaktionsmittel gemessen werden, vorzugsweise kontinuierlich.

5. Verfahren nach einem der Ansprüche 1 bis 4, **dadurch gekennzeichnet, dass** das Reaktionsmittel Ammoniak und/oder einen zur Bildung von Ammoniak im Gegenstand geeigneten Bestandteil, insbesondere Harnstoff, enthält.

6. Verfahren nach einem der Ansprüche 1 bis 5, **dadurch gekennzeichnet, dass** in einer Reaktionsmittelzuleitung (3), durch welche der Gegenstand mit dem Reaktionsmittel beaufschlagt wird, und optional auch in der Ableitung, welche das Prüfgas nach einem Passieren des Gegenstandes durchströmt, eine Konzentration von Ammoniak und/oder einem zur Bildung von Ammoniak geeigneten Bestandteil gemessen wird, wobei vorzugsweise mehrere Messungen zeitlich versetzt durchgeführt werden, um einen zeitlichen Verlauf zu bestimmen.

7. Verfahren nach einem der Ansprüche 1 bis 6, **dadurch gekennzeichnet, dass** der Gegenstand zumindest in einem Teilbereich während zumindest eines Teiles des Verfahrens eine Temperatur aufweist, welche einer üblichen Einsatztemperatur des Gegenstandes bei bestimmungsgemäßem Betrieb bei einer Reinigung eines Abgases eines Verbrennungsmotors entspricht, insbesondere 180 °C bis 600 °C, wobei der Gegenstand bevorzugt durch aufgeheizte Luft auf die Temperatur gebracht wird, bevor das Prüfgas aus den Gegenstand aufgebracht wird.

8. Verfahren nach einem der Ansprüche 1 bis 7, **dadurch gekennzeichnet, dass** das Prüfgas mit einer Temperatur auf den Gegenstand aufgebracht wird, welche einer üblichen Temperatur eines Abgases entspricht, mit welchem der Gegenstand bei bestimmungsgemäßem Betrieb beaufschlagt wird, insbesondere 180 °C bis 600 °C.

9. Verfahren nach einem der Ansprüche 1 bis 8, **dadurch gekennzeichnet, dass** das Reaktionsmittel vor einer Beaufschlagung des Gegenstandes mit dem Prüfgas vermischt wird.

10. Verfahren nach einem der Ansprüche 1 bis 9, **dadurch gekennzeichnet, dass** eine Temperatur des Gegenstandes während der Messung verändert wird, insbesondere um zumindest 10 °C.

11. Verfahren nach einem der Ansprüche 1 bis 10, **dadurch gekennzeichnet, dass** das Prüfgas dem Gegenstand über eine Zuleitung (2) zugeführt wird, mit welcher nur ein Teilbereich einer Stirnseite des Gegenstandes beaufschlagt wird, um eine katalytische Funktion eines Teilbereiches des Gegenstandes zu erfassen.

12. Verfahren nach Anspruch 11, **dadurch gekennzeichnet, dass** das Prüfgas sequenziell unterschiedlichen Teilbereichen des Gegenstandes zugeführt wird, um eine katalytische Funktion des gesamten Gegenstandes zu bestimmen.

13. Vorrichtung zur Messung einer katalytischen Funktion eines zur Reinigung eines Abgases eines Verbrennungsmotors geeigneten Gegenstandes, insbesondere eines Katalysators für ein Kraftfahrzeug, wobei mit der Vorrichtung ein Prüfgas durch den Gegenstand transportierbar und zumindest ein Bestandteil des Prüfgases vor und nach Passieren des Gegenstandes messbar ist, insbesondere zur Durchführung eines Verfahrens nach einem der Ansprüche 1 bis 12, **dadurch gekennzeichnet, dass** zusätzlich zum Prüfgas mit der Vorrichtung ein Reaktionsmittel auf den Gegenstand aufbringbar ist.

14. Vorrichtung nach Anspruch 13, **dadurch gekennzeichnet, dass** das Prüfgas über eine Zuleitung (2) auf den Gegenstand aufbringbar ist, mit welcher Zuleitung (2) das Prüfgas nur auf einen Teilbereich des Gegenstandes aufbringbar ist, um eine katalytische Funktion eines Teilbereiches zu bestimmen.

15. Vorrichtung nach Anspruch 13 oder 14, **dadurch gekennzeichnet, dass** die Zuleitung (2) mit einer Positioniervorrichtung verfahrbar ist, um sequenziell die katalytische Funktion unterschiedlicher Teilbereiche zu bestimmen.
